# EUROPEAN PATENT APPLICATION

(11) **EP 2 743 561 A2**
(43) Date of publication of application: **18.06.2014**
(21) Application number: 13196441.3
(22) Date of filing: 10.12.2013
(51) Int. Cl.: F16M 13/02, H04W 88/00

(54) **Wall mount bracket for a wireless access point enclosure**

(30) Priority: 10.12.2012 US 201261735248 P; 04.12.2013 US 201314096122
(71) Applicant: Panduit Corp., Tinley Park IL 60477 (US)
(72) Inventor: Malzone, Paul J, Frankfort, IL Illinois 60423 (US); Moreno, Eleobardo, St. John, IN Indiana 46373 (US); Wojcik, Alan F, Cedar Lake, IN Indiana 46303 (US)
(74) Representative: Roberts, Gwilym Vaughan

(57) **Abstract**

A wall mount bracket (50) for a wireless access point enclosure (100) is disclosed. The wall mount bracket has a first set of opposing side walls (51) and a second set of opposing sidewalls (52). The wall mount bracket also includes a top (54) and a bottom (56) with an opening (58). L-shaped arms (60) extend from the bottom of the wall mount bracket towards the top of the wall mount bracket. The wireless access point enclosure is positioned in the opening of the wall mount bracket and mounted on the L-shaped arms in a horizontal orientation.

## Description

### Cross Reference to Related Application

This application claims priority to U.S. Provisional Application Serial No. 61/735,248, filed December 10, 2012, the subject matter of which is hereby incorporated by reference in its entirety.

### Background of the Invention

The present invention relates to a wireless access point enclosure, and more particularly to a wall mount bracket for a wireless access point enclosure.

### Summary of the Invention

A wall mount bracket for a wireless access point enclosure is disclosed. The wall mount bracket has a first set of opposing side walls and a second set of opposing sidewalls. The wall mount bracket has a top and a bottom with an opening for receiving the wireless access point enclosure. The wall mount bracket also includes L-shaped arms extending from the bottom of the wall mount bracket towards the top of the wall mount bracket. The wireless access point enclosure is mounted on the L-shaped arms enabling the wireless access point enclosure to be mounted in a horizontal orientation.

### Brief Description of the Drawings

FIG. 1 is a perspective view of a wall mount bracket of the present invention and a wireless access point enclosure installed therein.
FIG. 2 is a perspective view of a room with the wall mount bracket of FIG. 1 and the wireless access point enclosure installed therein.
FIG. 3 is a top perspective view of the wall mount bracket of FIG. 1 and the wireless access point enclosure mounted therein.
FIG. 4 is a perspective view of the wall mount bracket of FIG. 1 and the wireless access point enclosure installed therein with the door of the wireless access point enclosure hinged open.
FIG. 5 is an exploded perspective view of the wireless access point enclosure positioned to be installed in the wall mount bracket of FIG. 1.
FIG. 6 is a front view of the wall mount bracket of FIG. 1 and wireless access point enclosure installed therein.
FIG. 7 is a side view of the wall mount bracket of FIG. 1 and the wireless access point enclosure installed therein.
FIG. 8 is a cross sectional view of the wall mount bracket and the wireless access point enclosure taken along line 8-8 of FIG. 6.
FIG. 9 is a partial sectional view of the wall mount bracket and the wireless access point enclosure taken along line 9-9 of FIG. 6.
FIG. 10 is a partial sectional view of the wireless access point enclosure of FIG. 8.
FIG. 11 is a partial sectional view of the wireless access point enclosure of FIG. 8.
FIG. 12 is a cross sectional view of the wall mount bracket and the wireless access point enclosure taken along line 12-12 of FIG. 7.
FIG. 13 is a partial sectional view of the wireless access point enclosure of FIG. 12.
FIG. 14 is a perspective view of the wall mount bracket of FIG. 3 with the knockout removed and a horizontal faceplate installed.
FIG. 15 is a perspective view of the wall mount bracket of FIG. 3 with the knockout removed and a vertical faceplate installed.
FIG. 16 is a perspective view of an alternative wall mount bracket with a wireless access point enclosure installed therein.

### Detailed Description

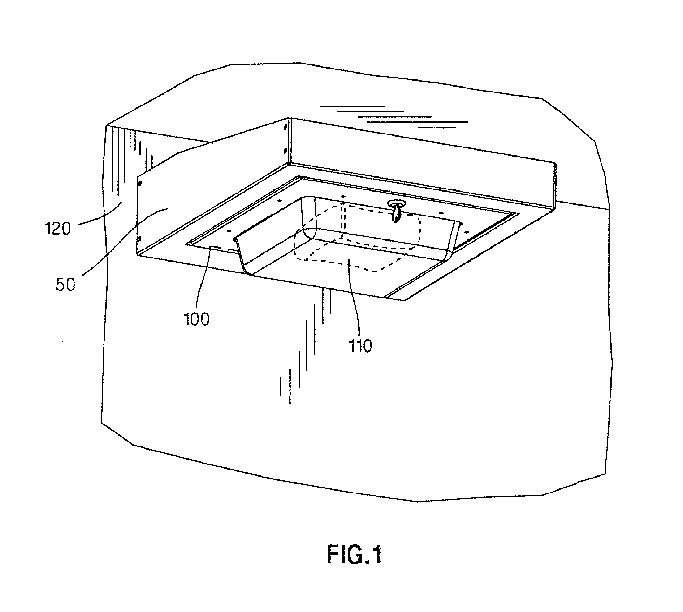

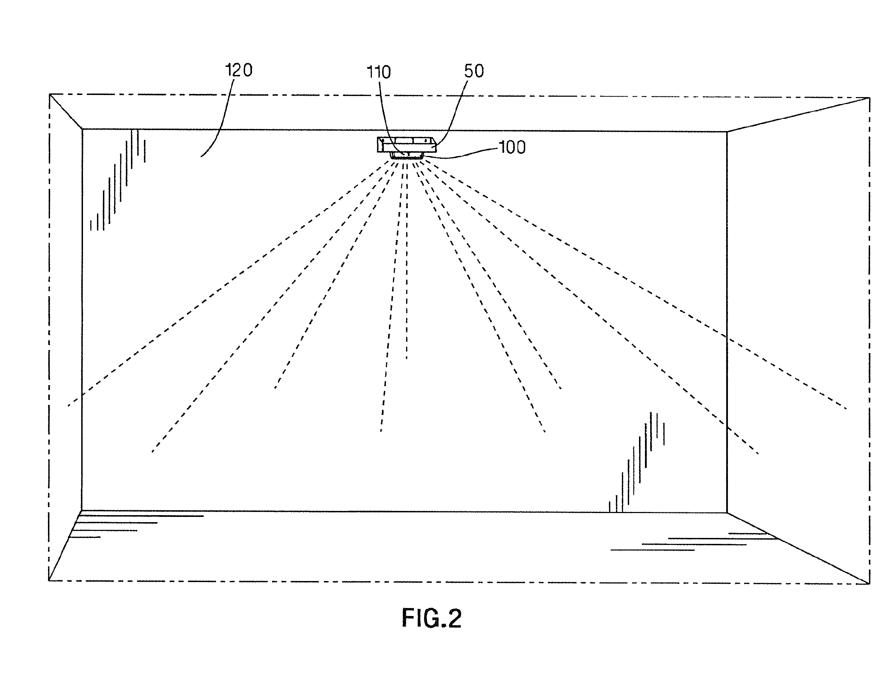

FIG. 1 illustrates a wall mount bracket 50 for an enclosure 100 containing a wireless access point 110, such as the Aruba wireless access point. As illustrated in FIGS. 1 and 2, the wall mount bracket 50 allows the wireless access point 110 and enclosure 100 to be mounted in a horizontal orientation to achieve the best wireless coverage.

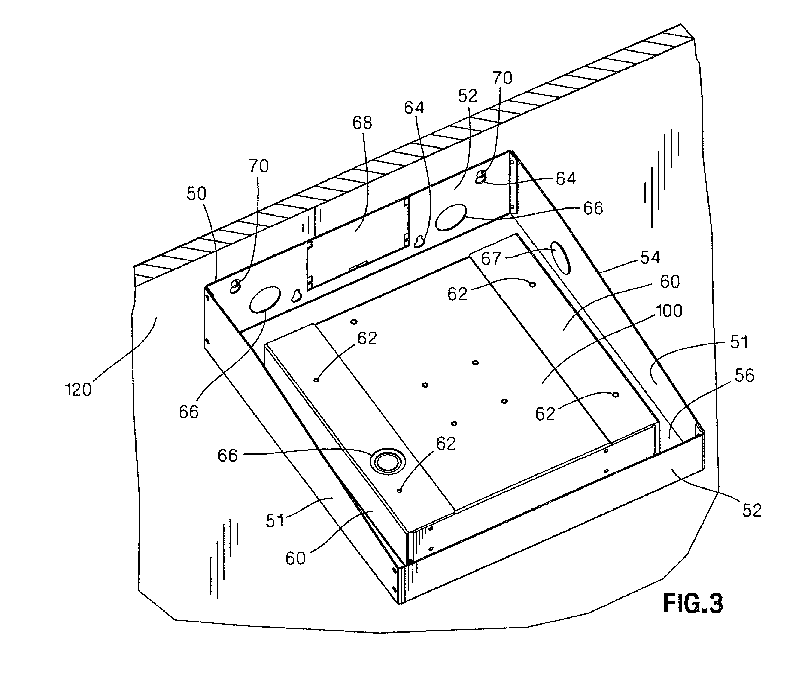

FIG. 3 illustrates the top of the wall mount bracket 50 with the wireless access point enclosure 100 installed therein. The wall mount bracket 50 is generally rectangular with a first set of opposing side walls 51 and a second set of opposing side walls 52. The wall mount bracket includes a top 54 and a bottom 56 with an opening 58. Two L shaped arms 60 extend from the bottom 56 towards the top 54 of the wall mount bracket 50. Each L-shaped arm has threaded studs extending towards the opening in the wall mount bracket. The wireless access point enclosure 100 is positioned on the L shaped arms 60 and is secured to the threaded studs 62 extending from the L-shaped arms 60. The installed wireless access point enclosure is accessible through the opening 58 in the wall mount bracket 50.

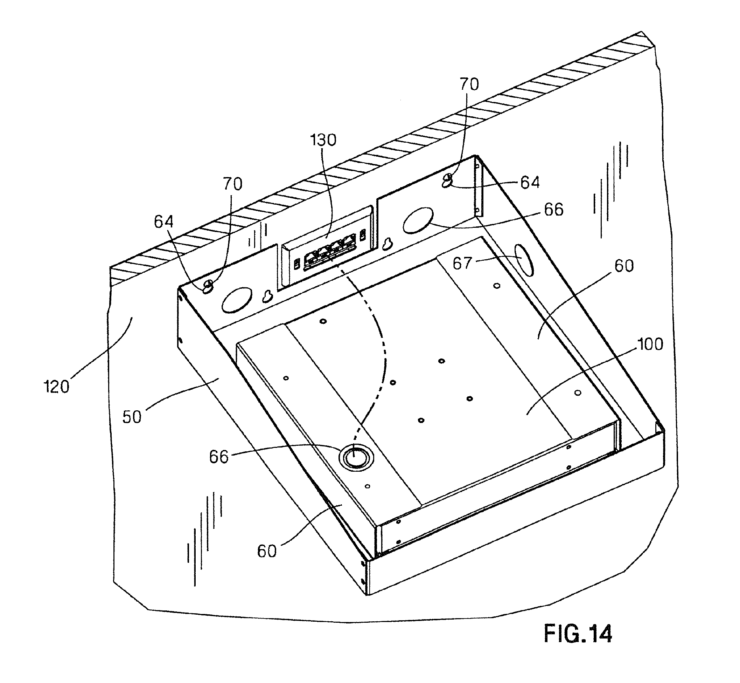

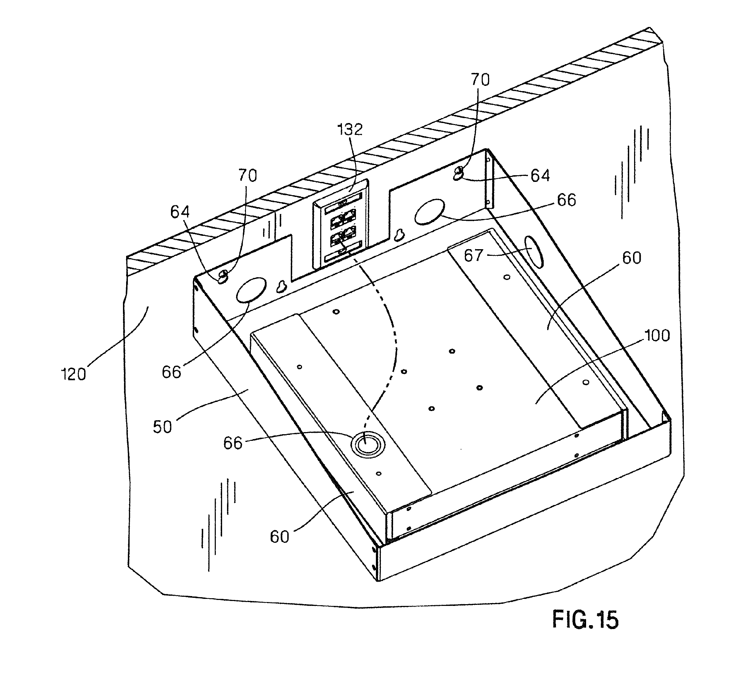

The wall mount bracket 50 includes a plurality of keyway wall mounting holes 64. The wall mount bracket 50 also includes a plurality of cable routing holes 66 for cable routing entry into the enclosure 100 and conduit knockout 67 which can be removed when routing cables through the sidewall of the enclosure 100. The wall mount bracket 50 includes a faceplate knockout 68, which can be removed if desired (see FIGS. 14 and 15).

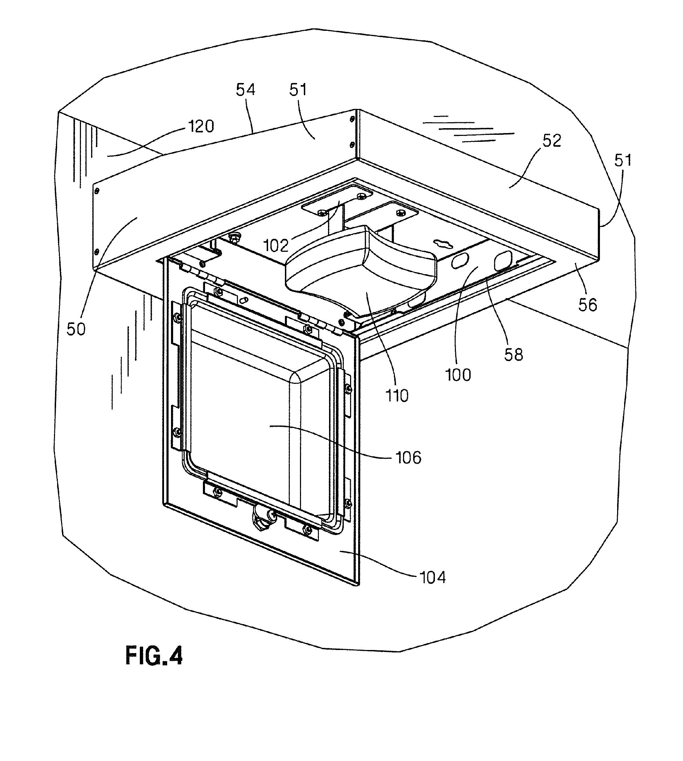

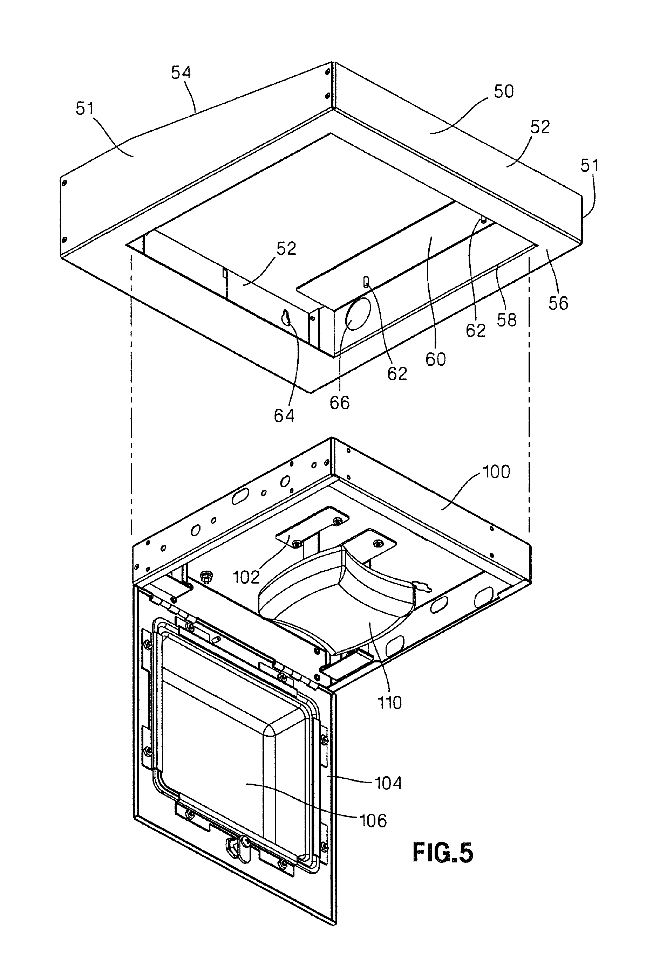

FIG. 4 illustrates the wireless access point 110 and enclosure 100 installed in the wall mount bracket 50. FIG. 5 illustrates the wireless access point 110 and enclosure 100 positioned to be installed in the wall mount bracket 50. The wireless access point 110 is mounted to a mounting bracket 102 secured to the enclosure 100. The mounting bracket 102 raises the wireless access point 110 to position the internal antenna above the metal enclosure 100 and the top surface of the door 104 to minimize the interference of the wireless signal. As a result, the metal door 104 of the enclosure 100 includes a raised transparent plastic window 106 to provide clearance for the raised wireless access point 110. The plastic window 106 provides a visual check of the wireless access point LED indicators while in operation.

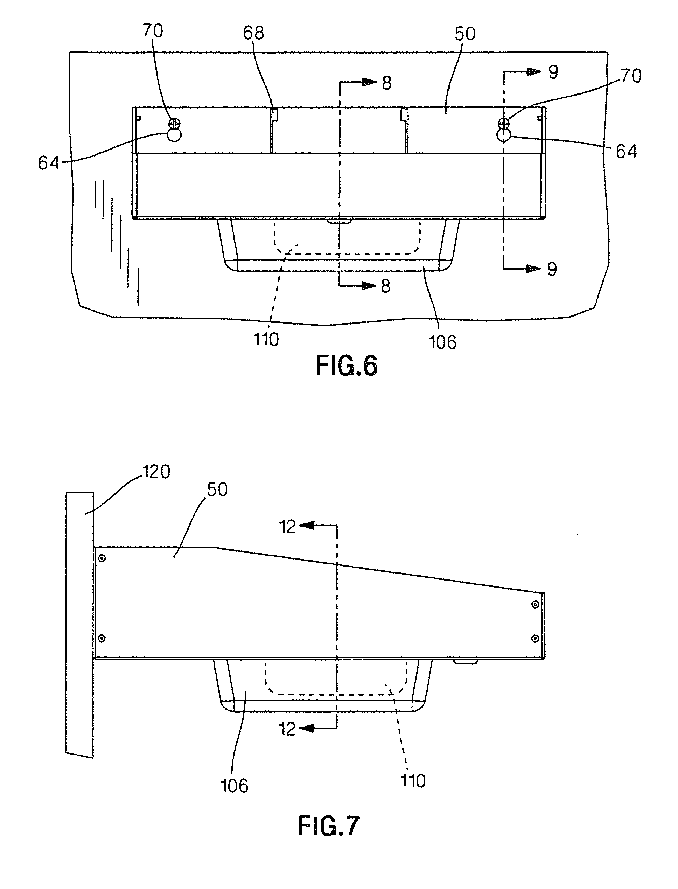

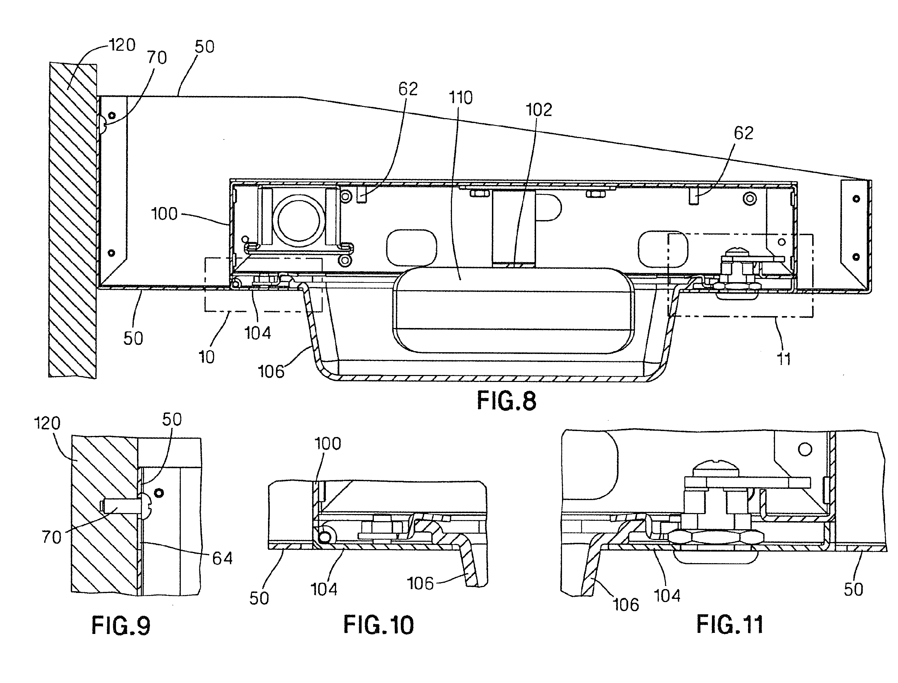

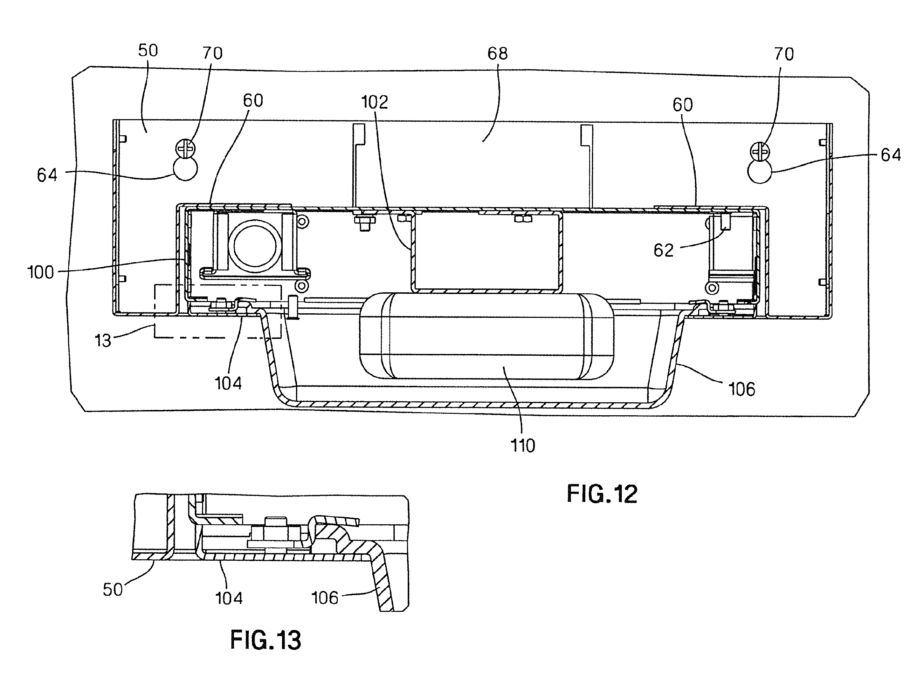

FIGS. 6-13 illustrate the wireless access point 110 and enclosure 100 secured to the wall mount bracket 50. FIGS. 8, 9, and 12 further illustrate the wall mount bracket 50 secured to the wall 120 via fasteners 70 positioned in the keyway wall mounting holes 64. FIG. 12 also illustrates the wireless access point enclosure 100 mounted on the L-shaped arms 60.

FIGS. 14 and 15 illustrate the wall mount bracket 50 of FIG. 3 with the faceplate knockout 68 removed from the wall mount bracket 50. The faceplate knockout 68 is removed to allow the wall mount bracket 50 to be mounted over a horizontal faceplate 130 (see FIG. 14) or a vertical faceplate 132 (see FIG. 15) to hide the faceplate 130, 132 and wiring from view. The wall mount bracket 50 also creates a tamper-resistance environment for the faceplate 130, 132 and the wiring.

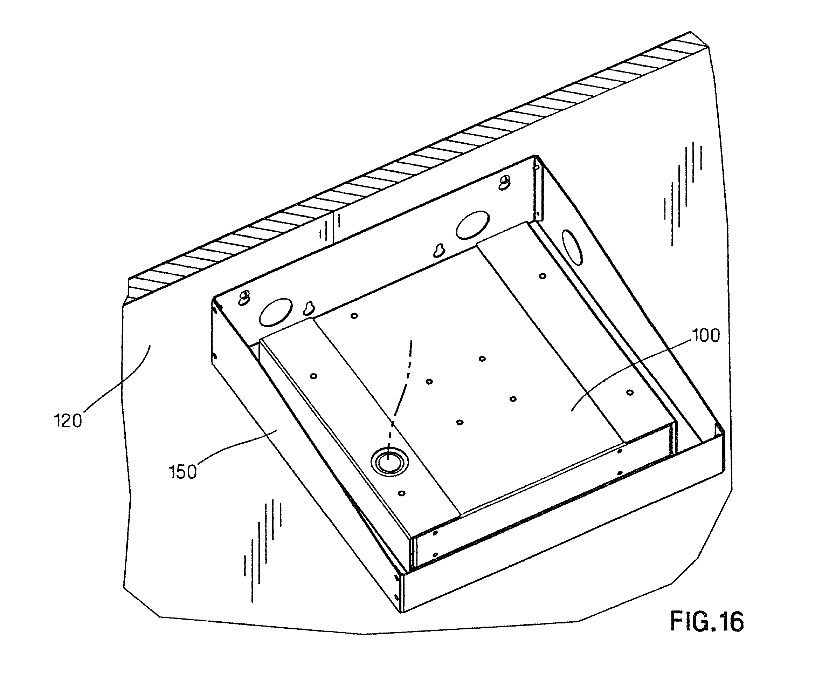

Alternatively, as illustrated in FIG. 16, the wall mount bracket 150 may include a solid wall without the knockout for a faceplate.

Furthermore, while the particular preferred embodiments of the present invention have been shown and described, it will be obvious to those skilled in the art that changes and modifications may be made without departing from the teaching of the invention. The matter set forth in the foregoing description and accompanying drawings is offered by way of illustration only and not as limitation. The actual scope of the invention is intended to be defined in the following claims when viewed in their proper perspective based on the prior art.

## Claims

1. A wall mount bracket for a wireless access point enclosure, the wall mount bracket comprising:
a first set of opposing side walls and a second set of opposing sidewalls;
a top and a bottom with an opening for receiving the wireless access point enclosure; and
L-shaped arms extending from the bottom towards the top of the wall mount bracket;
whereby the wireless access point enclosure is mounted on the L-shaped arms in a horizontal orientation.

2. The wall mount bracket of claim 1, wherein the L-shaped arms having threaded studs extending therefrom, the threaded studs extend towards the opening in the wall mount bracket.

3. The wall mount bracket of claim 1, wherein at least one of the L-shaped arms having a cable routing hole.

4. The wall mount bracket of claim 1, wherein at least one of the sidewalls having a hole for routing cables.

5. The wall mount bracket of claim 1, wherein at least one of the sidewalls having a conduit knockout.

6. The wall mount bracket of claim 1, wherein at least one of the sidewalls having mounting holes for receiving fasteners to mount the wall mount bracket to a wall.

7. The wall mount bracket of claim 1, wherein one of the sidewalls having a faceplate knockout for enabling the wall mount bracket to be mounted over a faceplate.
